**Europäisches Patentamt**

**European Patent Office**

**Office européen des brevets**

(19)

(11) Numéro de publication: **0 066 513**
**B1**

# FASCICULE DE BREVET EUROPEEN

(12)

(45) Date de publication du fascicule du brevet:
**27.08.86**

(21) Numéro de dépôt: **82400959.1**

(22) Date de dépôt: **25.05.82**

(51) Int. Cl.⁴: **F 01 P 7/04,** F 01 P 11/16,
G 05 D 23/24

(54) **Circuit de commande du moteur électrique d'un ventilateur destiné au refroidissement d'un moteur à combustion interne.**

(30) Priorité: **25.05.81 FR 8110328**

(43) Date de publication de la demande:
**08.12.82 Bulletin 82/49**

(45) Mention de la délivrance du brevet:
**27.08.86 Bulletin 86/35**

(84) Etats contractants désignés:
**DE GB IT**

(56) Documents cités:
**EP - A - 0 054 476**
**FR - A - 2 311 446**
**FR - A - 2 317 488**
**US - A - 3 568 648**

(73) Titulaire: **ACIERS ET OUTILLAGE PEUGEOT Société
dite:, F-25400 Audincourt (Doubs) (FR)**

(72) Inventeur: **Bertot, Maurice Marcel, 69 bis Rue de Belfort,
F-25200 Montbellard (FR)**

(74) Mandataire: **Moncheny, Michel et al, c/o Cabinet
Lavoix 2 Place d'Estienne d'Orves, F-75441 Paris
Cedex 09 (FR)**

ACTORUM AG

**Description**

La présente invention concerne un circuit de commande pour un moteur électrique d'entrainement d'un ventilateur servant notamment au refroidissement d'un moteur à combustion interne.

Le brevet US 3 568 648 décrit un circuit de commande pour un moteur électrique d'entraînement d'un ventilateur de refroidissement de moteur à combustion interne, dans lequel une boucle de réglage est connectée entre un générateur de consigne et une thermistance d'une part et un dispositif de commutation de puissance branché en série avec le moteur d'entraînement d'autre part, ladite thermistance étant placée au contact d'un fluide caloporteur dont la température reflète celle du moteur à combustion interne, ledit générateur de consigne, ladite boucle de réglage ainsi que le dispositif de commutation de puissance comportant chacun n sections affectées respectivement à n plages d'évolution de la température, tandis que le dispositif de commutation de puissance comporte au moins n contacts de relais commandés par des sections respectives de ladite boucle de réglage, le circuit de commande comportant également un circuit de protection composé de sections de générateur de consigne, de boucle de réglage et de dispositif de commutation de puissance.

Ce circuit comporte également un dispositif d'indication de défaut de thermistance.

Dans ce document antérieur, il s'agit du refroidissement d'un moteur thermique de locomotive et dans ce cas, il y a plusieurs sections de réglage de la température fonctionnant avec une seule thermistance de détection de la température de l'eau de refroidissement de ce moteur thermique.

Toutefois, chacune des sections qui comporte en sortie un relais de commande, agit sur un moteur électrique séparé entraînant à son tour un ventilateur.

Le brevet Fr 2 317 488 décrit un dispositif de régulation pour circuit de refroidissement dans lequel une résistance destinée, à température relativement basse, à réduire la vitesse du moteur d'un ventilateur, peut être court-circuitée.

L'invention vise à fournir un circuit de commande du type défini ci-dessus qui soit plus particulièrement adapté pour protéger en toutes circonstances le moteur thermique en dépit de variations de température de l'eau de refroidissement risquant à détériorer ce dernier.

L'invention a donc pour objet un tel circuit qui est caractérisé en ce que chacun desdits contacts de relais est branché en parallèle à une résistance qui est court-circuitée lorsque ladite section de la boucle de réglage fournit un signal de sortie, les montages en parallèle ainsi formés étant reliés tous en série dans le circuit dudit moteur électrique, en ce que le dispositif de commutation du circuit de protection est un contact de relais monté en parallèle sur tous les contacts de relais des autres sections de dispositif de commutation, pour brancher le moteur directement sur la source d'alimentation lorsqu'une température jugée dangereuse est atteinte, en ce que la borne de la thermistance fournissant le signal de mesure image de la température du fluide caloporteur est connectée à un comparateur auquel est relié également un générateur de consigne et en ce que la sortie de ce comparateur est reliée dans la boucle de réglage du circuit de protection pour déclencher le dispositif de commutation de celui-ci en cas de rupture des connexions de ladite thermistance.

Grâce à ces caractéristiques, il devient possible non seulement d'obtenir plusieurs vitesses de rotation du moteur électrique, d'assurer une fonction de protection en cas de défaut de la thermistance, mais également d'associer au moteur électrique des fonctions de protection qu'il serait nettement plus difficile à obtenir si l'on utilisait un système de refroidissement à plusieurs ventilateurs comme c'est le cas dans le US 3 768 648. En effet, dans le cas de ce document, on obtient la fonction de protection à l'aide de détecteurs différents, alors que grâce aux caractéristiques définies ci-dessus, la thermistance peut servir aussi bien pour la simple régulation que pour les fonctions de sécurité.

L'invention est exposée ci-après plus en détail à l'aide de dessins représentant seulement un mode d'éxécution.

– la Fig. 1 est un schéma détaillé d'un circuit de commande suivant l'invention;

– les Fig. 2a et 2b sont des diagrammes illustrant le fonctionnement de ce circuit de commande.

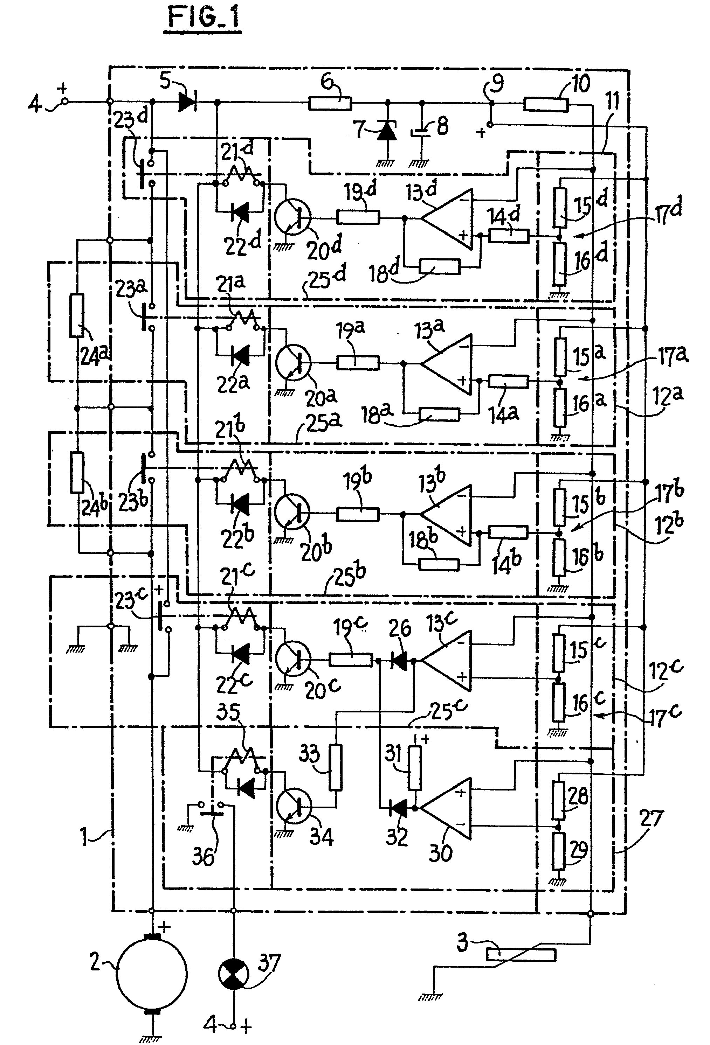

Conformément à l'exemple d'éxécution représenté sur la Fig. 1, le circuit de commande 1 objet de l'invention est destiné à alimenter un moteur électrique 2 à courant continu couplé à un ventilateur (non représenté) chargé de refroidir un moteur à combustion interne. Celui-ci peut être à refroidissement par air ou à refroidissement par un liquide, le ventilateur étant associé dans les deux cas au circuit de fluide qui est en échange thermique avec le moteur à combustion interne à refroidir.

Une thermistance 3 est placée de manière à détecter la température de ce fluide. Dans l'exemple décrit ici, cette thermistance présente un coefficient de température négatif.

Le circuit de commande est alimenté à partir d'une borne d'alimentation 4 qui est raccordée à une source de tension positive pouvant être la batterie du véhicule dont est équipé le moteur à combustion interne à refroidir. La borne 4 est reliée à l'anode d'une diode 5 qui est chargée de protéger le circuit contre une inversion de polarité au branchement. La cathode de la diode 5 est reliée à une résistance 6 connectée à son tour au montage en parallèle d'une diode Zener 7 et d'un condensateur 8, les composants 6, 7 et 8 constituant un régulateur de tension fournissant sur une borne 9 une tension régulée au circuit de commande à travers une résistance 10.

En négligeant pour le moment la partie du circuit qui est entourée par le trait mixte 11, cette partie du circuit étant facultative, on voit que le circuit de commande comporte plusieurs sections, deux en l'occurence qui sont entourées sur le schéma de la Fig. 1 par des traits mixtes désignés par les références 12a et 12b.

On va décrire tout d'abord ces deux parties du circuit.

Comme les parties 12a et 12b sont identiques aux valeurs des composants près, on a affecté à ces divers composants des numéros de références numériques suivis, suivant le cas des indices a et b. Il est à noter dès à présent que le circuit peut comporter un nombre quelconque de sections telles que 12a et 12b suivant la finesse de la régulation que l'on désire obtenir.

La thermistance 3 est reliée à la résistance 10 et forme avec cette dernière un diviseur de tension dont le point de jonction reflète la température mesurée du fluide de refroidissement du moteur à combustion interne. Cette jonction est reliée à l'entrée inverseuse d'un amplificateur opérationnel 13a, dont l'entré non-inverseuse est connectée par l'intermédiaire d'une résistance 14a à un diviseur de tension composé de résistances 15a et 16a formant ensemble un générateur de tension de référence désignée d'une façon générale par la référence 17a. L'amplificateur 13a comporte une résistance de réaction 18a branchée entre sa sortie et son entrée non-inverseuse, la sortie étant reliée par ailleurs à une résistance 19a connectée également à la base d'un transistor 20a. Ce transistor est du type à commutation et son circuit émetteur-collecteur est relié entre la masse et la bobine 21a d'un relais dont la borne opposée est connectée à la cathode de la diode 5 pour recevoir la tension d'alimentation. La bobine de relais 21a est shuntée par une diode 22a.

La bobine 21a commande un contact de relais 23a ouverte au repos connectée en parallèle avec une résistance 24a. Le montage en parallèle de ce contact et de cette résistance est connecté en série entre la borne 4 et le moteur 2 avec les composants correspondants de la section 12b du circuit de commande.

La partie de chaque section 12a constituée par l'amplificateur 13a et le transistor 20a et leurs composants associés, forme une boucle de réglage 25a tandis que la partie composée du relais 21a, 23a forme un organe de commande de puissance intercalé dans le circuit d'alimentation du moteur 2.

La section 12c du circuit de commande est quelque peu différente des sections 12a et 12b. En effet, le point intermédiaire du diviseur de tension 15c, 16c est raccordé directement à l'entrée non-inverseuse de l'amplificateur 13c, tandis que la sortie de celui-ci est reliée à l'anode d'une diode 26 dont la cathode est reliée à la résistance 19c. Par ailleurs, le contact 23c commandé par la bobine 21c est relié en parallèle aux contacts 23a et 23b pour court-circuiter ceux-ci et permettre ainsi le branchement direct du moteur 2 sur la source d'alimentation matérialisée par la borne 4.

Le circuit de commande comporte également une section de protection 27 qui est destinée à éviter l'interruption du refroidissement du moteur à combustion interne à la suite d'une rupture du fil de connexion de la thermistance 3 avec le circuit de commande 1. A cet effet, cette section 27 comporte un générateur de tension de référence composé de résistances 28 et 29 en série, le point de jonction de ce diviseur étant relié à l'entrée inverseuse de l'amplificateur opérationnel 30, l'entrée non-inverseuse de cet amplificateur étant reliée à la jonction de la résistance 10 et de la thermistance 3. La sortie de l'amplificateur opérationnel 30 est polarisée par une résistance 31 qui est raccordée par ailleurs à la borne 9 par un conducteur qui n'a pas été représenté sur le dessin.

La sortie de l'amplificateur 30 est reliée également à l'anode d'une diode 32 dont la cathode est connectée à la jonction entre la résistance 19c et la diode 26 de la section 12c.

Par ailleurs, la sortie de l'amplificateur opérationnel 13c est reliée par l'intermédiaire d'une résistance 33 à la base d'un transistor de commande 34 dont le circuit émetteur-collecteur est relié en série avec une bobine de relais 35 commandant un contact 36 branché dans le circuit d'alimentation d'une lampe d'avertissement 37 reliée par ailleurs à la source d'alimentation de la borne 4.

Le circuit qui a été décrit jusqu'à présent fonctionne de la façon suivante.

A la mise sous tension du circuit, c'est-à-dire lorsque le moteur à combustion interne est mis en marche le moteur 2 est branché sur la source de tension par l'intermédiaire des résistances 24a et 24b, les contacts de relais 23a et 23b étant encore ouverts. (On rappelle que l'on ne tient pas compte encore du fonctionnement du circuit 11 qui sera décrit ultérieurement.) La jonction du contact 23a et de la résistance 24a est donc branchée directement sur la borne 4. Le ventilateur entraîné par le moteur 2 commence donc à tourner à une vitesse relativement faible.

La température du fluide caloporteur du moteur à combustion interne qui est basse au démarrage s'élève progressivement de sorte que la thermistance 3 voit sa valeur ohmique diminuer le potentiel du point milieu du diviseur de tension qu'elle constitue avec la résistance 10 étant l'image de la température.

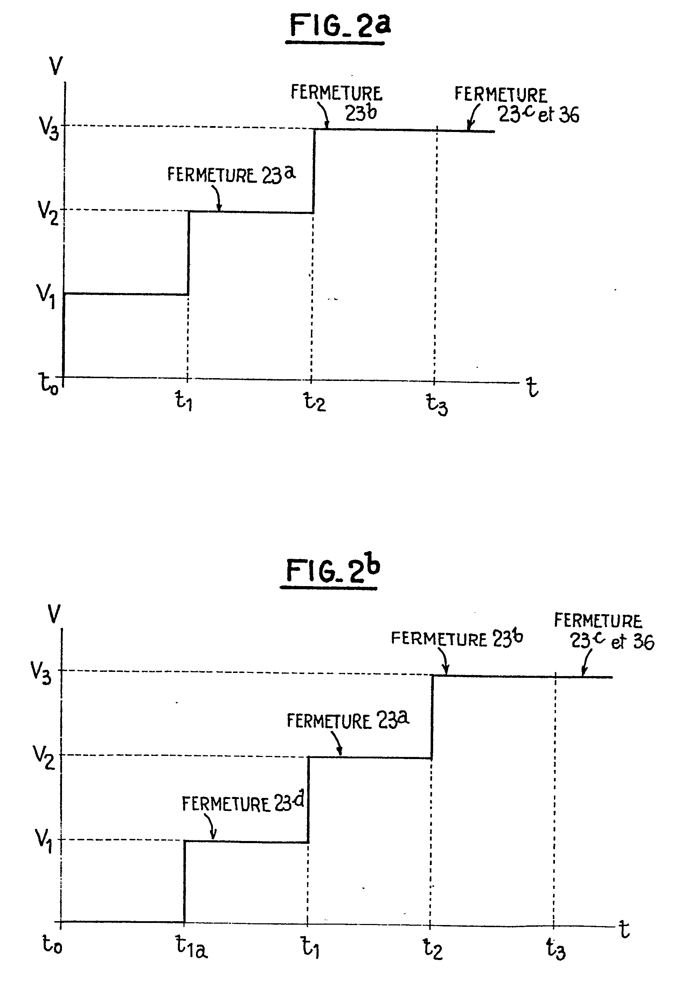

Ce potentiel diminue jusqu'à atteindre un premier seuil $t_1$ (voir Fig. 2a) fixé par les résistances 15a et 16a. Dès que ce seuil est atteint, la sortie de l'amplificateur 13a bascule de l'état bas à l'état haut en provoquant la fermeture du contact 23a à travers le transistor 20a et par l'intermédiaire de la bobine 21a. Le contact 23a court-circuitant la résistance 24a, le circuit du moteur 2 ne contient plus que la résistance 24b et le moteur tourne donc à une vitesse $V_2$ supérieure à la vitesse précédemment commandée et indiquée par $V_1$ sur la fig. 2a.

Si la température du fluide caloporteur continue à croître, le second seuil fixé par les résistances 15b et 16b est atteint au moment où la température est atteinte. Il en résulte que la sortie de l'amplificateur 13b bascule commandant ainsi la fermeture du contact 23b par l'intermédiaire du transistor 20b et de la bobine 21b, la résistance 24b étant ainsi court-circuitée.

Le moteur 2 est alors alimenté à la pleine tension et tourne à la vitesse $V_3$, supérieure à la vitesse $V_2$.

Si la température du fluide caloporteur s'élève encore, le même processus que précédemment se produit dans la section 12c du circuit de commande, le potentiel de mesure franchissant un troisième seuil $t_3$ fixé par les résistances 15c et 16c. Il en résulte la fermeture du contact 23c de sorte que le moteur 2 est directement relié à la borne 4 quelle que soit la position des contacts 23a et 23b. La section 12c constitue donc un dispositif de sécurité car si la température du fluide caloporteur a atteint cette valeur extrême ($t_3$), il s'agit d'une anomalie. C'est ainsi que le basculement de l'amplificateur 13c commande également le transistor 34 et la bobine 35 pour assurer la fermeture d'un contact 36 qui met en circuit la lampe d'avertissement 37.

Le processus est réversible et l'on comprend que si la température diminue, il se produit successivement l'extinction de la lampe 37 et le passage de la vitesse élevée vers la vitesse faible correspondant au dépassement vers le bas du seuil inférieur de température ($t_1$).

La section 27 du circuit de commande constitue un dispositif de sécurité supplémentaire. En effet, la sortie de l'amplificateur 30 bascule de l'état bas à l'état haut si la liaison entre la thermistance 3 et le circuit de commande 1 vient à être coupée pour une raison quelconque. Ceci ferme le contact 23c par l'intermédiaire de la diode 32 de la résistance 19c du transistor 20c et la bobine de relais 21c, de sorte que le moteur 2 est commandé à cette vitesse maximale qui assure un refroidissement du moteur à combustion interne peut être surabondant mais indispensable pour que la sécurité soit assurée.

Si les extrémités de la thermistance 3 sont en court-circuit, toutes les sections 12a à 12c basculent, le moteur 2 tourne donc également à pleine vitesse en étant alimenté directement à partir de la borne 4 et la lampe d'avertissement 37 s'allume.

A titre de variante, le circuit que l'on vient de décrire peut être complété par la section 11 qui est représentée en haut de la Fig. 1. Le fonctionnement du circuit de commande est alors celui représenté sur la Fig. 2b. La section 11 est identique aux sections 12a à 12c et on a donc indiqué les composants analogues par des références identiques suivies d'un indice littéral d.

La section 11 fonctionne dès franchissement d'une température de seuil fixée à la valeur $t_{1a}$ reflétée par le potentiel de la jonction formé par les résistances 15d et 16d. Ce seuil est inférieur à ceux correspondant aux potentiels $t_1$, $t_2$ et $t_3$ de la Fig. 2a. Dans ces conditions, lorsque le circuit de commande est mis sous tension, le moteur 2 ne tourne pas puisque la température $t_{1a}$ n'étant pas encore franchie, le contact 23d est encore ouvert. Dès que la température $t_{1a}$ est franchie le

moteur 2 tourne à la vitesse $V_1$, et le fonctionnement du circuit est alors analogue pour une évolution de la température jusqu'à la température $t_3$ et plus haut.

Il est à noter que les sections 12a et 12b peuvent être multipliées pour affiner la courbe de régulation de la température en fonction des besoins.

**Revendications**

1. Circuit de commande pour un moteur électrique d'entraînement d'un ventilateur de refroidissement de moteur à combustion interne, dans lequel une boucle de réglage est connectée entre un générateur de consigne et une thermistance (3) d'une part et un dispositif de commutation de puissance branché en série avec le moteur d'entraînement (2) d'autre part, ladite thermistance (3) étant placée au contact d'un fluide caloporteur dont la température reflète celle du moteur à combustion interne, ledit générateur de consigne, ladite boucle de réglage ainsi que le dispositif de commutation de puissance comportant chacun n sections (25a, 25b, 21a, 21b) affectées respectivement à n plages d'évolution de la température, tandis que ledit dispositif de commutation de puissance comporte au moins n contacts de relais (23a, 23b) commandés par des sections respectives de ladite boucle de réglage, le circuit de commande comportant également un circuit de protection (12c) composé de sections de générateur de consigne, de boucle de réglage et de dispositif de commutation de puissance (17c, 25c, 22c), caractérisé en ce que chacun desdits contacts de relais est branché en parallèle à une résistance (14A, 24b) qui est court-circuitée lorsque ladite section de la boucle de réglage fournit un signal de sortie, les montages en parallèle ainsi formés étant reliés tous en série dans le circuit dudit moteur électrique (2), en ce que le dispositif de commutation du circuit de protection (12c) est un contact de relais monté en parallèle sur tous les contacts de relais (23a, 23b, 23d) des autres sections de dispositif de commutation, pour brancher le moteur (2) directement sur la source d'alimentation lorsqu'une température jugée dangereuse est atteinte, en ce que la borne de la thermistance (3) fournissant le signal de mesure image de la température du fluide caloporteur est connectée à un comparateur (30) auquel est relié également un générateur de consigne (27) et en ce que la sortie de ce comparateur (30) est reliée dans la boucle de réglage du circuit de protection (12c) pour déclencher le dispositif de commutation (21c, 23c) de celui-ci en cas de rupture des connexions de ladite thermistance.

2. Circuit de commande suivant la revendication 1, caractérisé en ce que ladite boucle de réglage ainsi que le dispositif de commutation de puissance comportent chacun une section supplémentaire (25d, 21d) et en ce que la section supplémentaire du dispositif de commutation (21d) comporte un contact de relais (23d) qui est branché directement dans le circuit du moteur et dépourvu de résistance en parallèle.

## Claims

1. A control circuit for an electric motor driving an internal combustion engine cooling fan, in which a regulating loop is connected between a set value generator and a thermistor (3) on one hand, and a power switching device connected in series with the driving motor (2) on the other hand, said thermistor (3) being placed in contact with a heat-carrying fluid whose temperature reflects the temperature of the internal combustion engine, said set value generator, said regulating loop and the power switching device each comprising n sections (25a, 25b, 21a, 21b) respectively assigned to n ranges of evolution of the temperature, while said power switching device comprises at least n relay contacts (23a, 23b) controlled by respective sections of said regulating loop, the control circuit further comprising a protection circuit (12c) comprising sections of set value generator, regulating loop and power switching device (17c, 25c, 22c), characterised in that each of said relay contacts is connected in parallel with a resistor (14a, 24b) which is shorted when said section of the regulating loop delivers an output signal, the parallel circuits thus formed being all connected in series in the circuit of said electric motor (2), the switching device of the protection circuit (12c) is a relay contact connected in parallel with all the relay contacts (23a, 23b, 23d) of the other switching device sections for connecting the motor (2) directly to the supply when a temperature which is considered dangerous is reached, the terminal of the thermistor (3) delivering the measuring signal which is the image of the temperature of the heat-carrying fluid is connected to a comparator (30) to which is also connected a set value generator (27), and the output of this comparator (30) is connected in the regulating loop of the protection circuit (12c) for initiating the switching device (21c, 23c) of the protection circuit in the event of breakage of the connections of said thermistor.

2. A control circuit according to claim 1, characterised in that said regulating loop and the power switching device each comprise an additional section (25d, 21d) and the additional section of the switching device (21d) comprises a relay contact (23d) which is directly connected in the circuit of the motor and devoid of a resistor in parallel.

## Patentansprüche

1. Steuerungskreis für einen Ventilatorelektromotor zur Kühlung einer Brennkraftmaschine, bei dem ein Regelkreis zwischen einen Befehlssignalgenerator und einen Thermistor (3) einerseits und eine in Reihe mit dem Ventilatorelektromotor (2) liegende Leistungskommutiervorrichtung andererseits eingeschaltet ist, wobei der Thermistor (3) in Kontakt mit einem Wärmeträgermedium angeordnet ist, dessen Temperatur derjenigen der Brennkraftmaschine entspricht, wobei der Befehlssignalgenerator, der Regelkreis sowie die Leistungskommutiervorrichtung jeweils n Sektionen (25a, 25b, 21a, 21b) umfassen, die jeweils n Temperaturentwicklungsbereichen zugeordnet sind, während die Leistungskommutiervorrichtung wenigstens n Relaiskontakte (23a, 23b) aufweist, die durch die jeweiligen Sektionen des Regelkreises gesteuert sind, und wobei der Steuerkreis ebenfalls eine Schutzschaltung (12c) umfasst, die aus Sektionen eines Befehlssignalgenerators, eines Regelkreises und einer Leistungskommutiervorrichtung (17c, 25c, 22c) besteht, dadurch gekennzeichnet, dass jeder der Relaiskontakte parallel zu einem Widerstand (14A, 24b) geschaltet ist, der überbrückt wird, wenn die Sektion des Regelkreises ein Ausgangssignal liefert, wobei die so gebildeten Parallelschaltungen im Schaltkreis des Elektromotors (2) alle in Reihe verbunden sind, dass die Kommutiervorrichtung der Schutzschaltung (12c) ein Relaiskontakt ist, der parallel zu allen Relaiskontakten (23a, 23b, 23d) der anderen Kommutiervorrichtungssektionen geschaltet ist, um den Motor (2) direkt elektrisch mit der Speisestromquelle zu verbinden, sobald eine als gefährlich erachtete Temperatur erreicht ist, dass die Anschlussklemme des Thermistors (3), der das die Temperatur des Wärmeträgermediums wiedergebende Messsignal liefert, an einen Vergleicher (30) angeschlossen ist, mit dem in gleicher Weise ein Befehlssignalgenerator (27) verbunden ist, und dass der Ausgang des Vergleichers (30) in den Regelkreis der Schutzschaltung (12c) eingeschaltet ist, um die Kommutiervorrichtung (21c, 23c) derselben auszulösen, falls die Verbindungen des Thermistors unterbrochen sind.

2. Steuerungskreis nach Anspruch 1, dadurch gekennzeichnet, dass der Regelkreis wie auch die Leistungskommutiervorrichtung jeweils eine zusätzliche Sektion (25d, 21d) umfassen, und dass die zusätzliche Sektion der Kommutiervorrichtung (21d) einen Relaiskontakt (23d) umfasst, der ohne Parallelwiderstand direkt in den Motorkreis eingeschaltet ist.

FIG.1

0 066 513

## FIG. 2ᵃ

## FIG. 2ᵇ